# EUROPEAN PATENT APPLICATION

(11) **EP 2 040 415 A2**
(43) Date of publication of application: **25.03.2009**
(21) Application number: 08007730.8
(22) Date of filing: 21.04.2008
(51) Int. Cl.: H04L 12/24

(54) **Video processing apparatus and video processing method**

(30) Priority: 05.09.2007 JP 2007230756
(71) Applicant: Kabushiki Kaisha Toshiba, Minato-ku, Tokyo 105-8001 (JP)
(72) Inventor: Tomita, Gou, Tokyo 105-8001 (JP)
(74) Representative: HOFFMANN EITLE

(57) **Abstract**

According to one embodiment, a video processing apparatus includes: a structure computation unit that obtains a connection structure of HDMI compliant equipments connected with one another by HDMI (High-Definition Multimedia Interface) from physical addresses of the HDMI compliant equipments; and a video output unit that outputs video signal for displaying the connection structure of the HDMI compliant equipments connected by HDMI.

## Description

### CROSS-REFERENCE TO RELATED APPLICATIONS

This application is based upon and claims the benefit of priority from JP-A-2007-230756, filed September 5, 2007, the entire contents of which are incorporated herein by reference.

### BACKGROUND

### 1. Field

One embodiment of the invention relates to a video processing apparatus.

### 2. Description of the Related Art

Equipment names, models, etc., can be transferred between HDMI equipments and can be displayed on displays of the HDMI equipments based on information described in EDID (Extended Display Identification Data) contained in the HDMI standard.

However, actual HDMI equipments are not necessarily connected in a one-to-one correspondence and, for example, a case where a digital TV and an HDMI compatible amplifier are connected and further a plurality of HDMI equipments are connected to the amplifier is imagined.

Even in such as case, information only of the amplifier directly connected to the digital TV can be displayed from the digital TV.
Hitherto, an art of displaying the connection state of a tree structure of a network has been known. (For example, refer to Japanese Patent No. 3471589)

However, in the art disclosed in Japanese Patent No. 3471589, the connection structure of a network cannot be displayed about equipments connected in conformity with HDMI-CEC.

### SUMMAR OF THE INVENTION

The object of the invention is to enhance the convenience of the user by displaying the connection structure of a network about equipments connected in conformity with HDMI-CEC.
According to an embodiment of the present invention, there is provided a video processing apparatus including a structure computation unit that obtains a connection structure of HDMI equipments connected with one another by HDMI (High-Definition Multimedia Interface) from physical addresses of the HDMI equipments; and a video output unit that outputs video signal for displaying the connection structure of the HDMI equipments connected by HDMI.

### BRIEF DESCRIPTION OF THE SEVERAL VIEWS OF THE DRAWINGS

A general architecture that implements the various feature of the invention will now be described with reference to the drawings. The drawings and the associated descriptions are provided to illustrate embodiments of the invention and not to limit the scope of the invention.
FIG. 1 is an exemplary diagram to show a main signal processing system of a digital TV broadcast receiver 101 according to the embodiment;
FIG. 2 is an exemplary drawing to describe physical addresses given based on the HDMI standard specification according to the embodiment;
FIG. 3 is an exemplary drawing to show an example of connection according to HDMI including the digital TV broadcast receiver 101 according to the embodiment;
FIG. 4 is an exemplary drawing to show a screen display example of the connection structure of HDMI connection according to the embodiment;
FIG. 5 is an exemplary drawing to show a screen display example of the connection structure of HDMI connection according to the embodiment; and
FIG. 6 is an exemplary drawing to show a screen display example of a partial hierarchical structure of the connection structure of HDMI connection according to the embodiment.

### DETAILED DESCRIPTION

Referring now to the accompanying drawings, there is shown an embodiment of the invention.

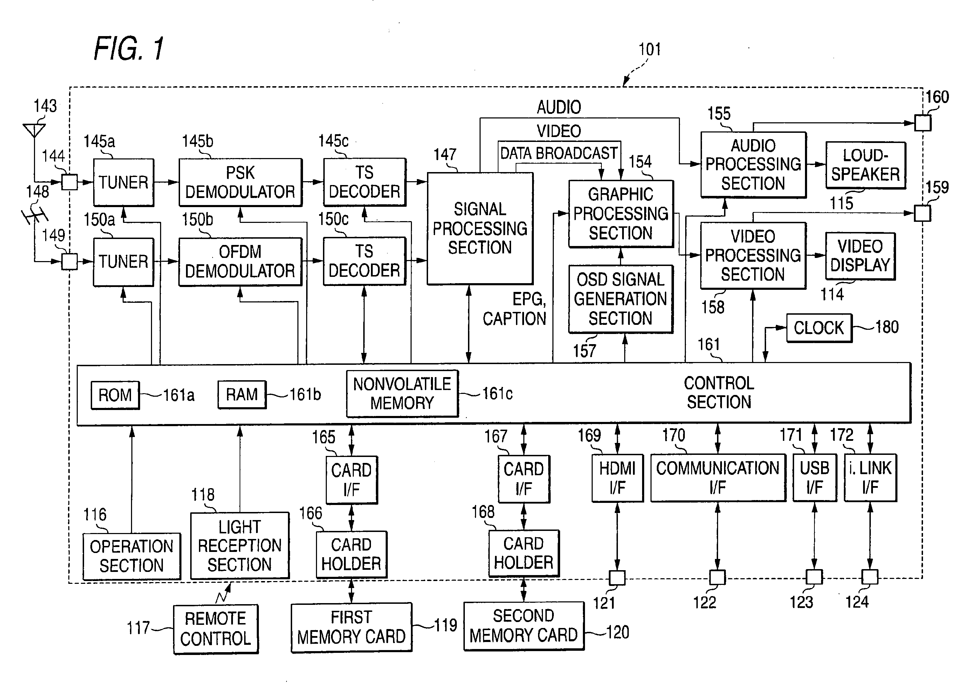

FIG. 1 shows a main signal processing system of a digital TV broadcast receiver 101.
A satellite digital TV broadcast signal received at an antenna 143 for receiving BS/CS digital broadcast is supplied to a satellite digital broadcast tuner 145a through an input terminal 144.

The tuner 145a selects a broadcast signal of any desired channel according to a control signal from a control section 161 and outputs the selected broadcast signal to a PSK (Phase Shift Keying) demodulator 145b.

The PSK demodulator 145b demodulates the broadcast signal selected in the tuner 145a according to a control signal from the control section 161 to obtain a transport stream containing the desired program and outputs the transport stream to a TS decoder 145c.

The TS decoder 145c performs TS decoding processing of a transport stream (TS) multiplexed signal according to a control signal from the control section 161 and depackets a digital video signal and audio signal of the desired program to provide a PES (Packetized Elementary Stream) and outputs the PES to an STD buffer 147f in a signal processing section 147.

The TS decoder 145c also outputs section information sent by digital broadcast to a section processing section 147h in the signal processing section 147.
A digital terrestrial TV broadcast signal received at an antenna 148 for receiving terrestrial broadcast is supplied to a digital terrestrial broadcast tuner 150a through an input terminal 149.

The tuner 150a selects a broadcast signal of any desired channel according to a control signal from the control section 161 and outputs the selected broadcast signal to an OFDM (Orthogonal Frequency Division Multiplexing) demodulator 150b.

The OFDM demodulator 150b demodulates the broadcast signal selected in the tuner 150a according to a control signal from the control section 161 to obtain a transport stream containing the desired program and outputs the transport stream to a TS decoder 150c.

The TS decoder 150c performs TS decoding processing of a transport stream (TS) multiplexed signal according to a control signal from the control section 161 and depackets a digital video signal and audio signal of the desired program to provide a PES (Packetized Elementary Stream) and outputs the PES to the STD buffer 147f in the signal processing section 147.

The TS decoder 150c also outputs section information sent by digital broadcast to the section processing section 147h in the signal processing section 147.
At the TV viewing time, the signal processing section 147 selectively performs predetermined digital signal processing for the digital video signals and audio signals supplied from the TS decoders 145c and 150c, and outputs the signals to a graphic processing section 154 and an audio processing section 155. At the content playing time, the signal processing section 147 selects a content playback signal input from the control section 161, performs predetermined digital signal processing, and outputs the signal to the graphic processing section 154 and the audio processing section 155.

From the signal processing section 147, various pieces of data, electronic program guide (EPG) information, and program attribute information (program genre, etc.,) to obtain a program, caption information, etc., (service information, SI and PSI) are input to the control section 161.

The control section 161 performs image generation processing to display EPG and captions from the input information and outputs the generated image information to the graphic processing section 154.
The section processing section 147h in the signal processing section 147 outputs various pieces of data, electronic program guide (EPG) information, and program attribute information (program genre, etc.,) to obtain a program, caption information, etc., (service information, SI and PSI) from the section information input from the TS decoder 145c (150c) to the control section 161.

The graphic processing section 154 has functions of combining (1) a digital video signal supplied from an AV decoder 147g in the signal processing section 147, (2) an OSD signal generated in an OSD (On Screen Display) signal generation section 157, (3) image data provided by data broadcast, and (4) EPG and caption signal generated by the control section 161 and outputting the resultant signal to a video processing section 158.

When captions provided by broadcast captioning are displayed, the graphic processing section 154 performs processing of superimposing caption information on a video signal based on caption information based on control from the control section 161.

The digital video signal output from the graphic processing section 154 is supplied to the video processing section 158. The video processing section 158 converts the input digital video signal into an analog video signal in a format that can be displayed on a video display 114 and then outputs the analog video signal to the video display 114 for displaying video and also outputs the analog video signal to the outside through an output terminal 159.

The audio processing section 155 converts the input digital audio signal into an analog audio signal in a format that can be played back in a loudspeaker 115 and then outputs the analog audio signal to the loudspeaker 115 for playing back audio and also outputs the analog audio signal to the outside through an output terminal 160.

All operation of the digital TV broadcast receiver 101 including various types of reception operation described above is controlled by the control section 161. The control section 161, which contains a CPU (Central Processing Unit), etc., receives operation information from an operation section 116 or receives operation information sent from a remote control 117 using infrared radiation, for example, through a light reception section 118 and controls the sections so as to reflect the operation.

In this case, the control section 161 mainly uses ROM (Read-Only Memory) 161a storing a control program executed by the CPU, RAM (Random Access Memory) 161b for providing a work area for the CPU, and nonvolatile memory 161c for storing various pieces of setting information, control information, etc.

The control section 161 is connected to a card holder 166 in which a first memory card 119 can be placed through a card I/F (Interface) 165. Accordingly, the control section 161 can transfer information to and from the first memory card 119 placed in the card holder 166 through the card I/F 165.

Further, the control section 161 is connected to a card holder 168 in which a second memory card 120 can be placed through a card I/F 167. Accordingly, the control section 161 can transfer information to and from the second memory card 120 placed in the card holder 168 through the card I/F 167.

The control section 161 is also connected to an HDMI terminal 121 through an HDMI I/F 169. Accordingly, the control section 161 can transfer information to and from an HDMI equipment connected to the HDMI terminal 121 through the HDMI I/F 169.

Further, the control section 161 is connected to a LAN terminal 122 through a communication I/F 170. Accordingly, the control section 161 can transfer information to and from an equipment connected to the LAN terminal 122 (for example, LAN-HDD, etc.,) through the communication I/F 170.

The control section 161 is also connected to a USB terminal 123 through a USB I/F 171. Accordingly, the control section 161 can transfer information to and from an equipment connected to the USB terminal 123 (for example, LAN-HDD, etc.,) through the USB I/F 171.

Further, the control section 161 is connected to an i.LINK terminal 124 through an i.LINK I/F 172. Accordingly, the control section 161 can transfer information to and from an equipment connected to the i.LINK terminal 124 through the i.LINK I/F 172.

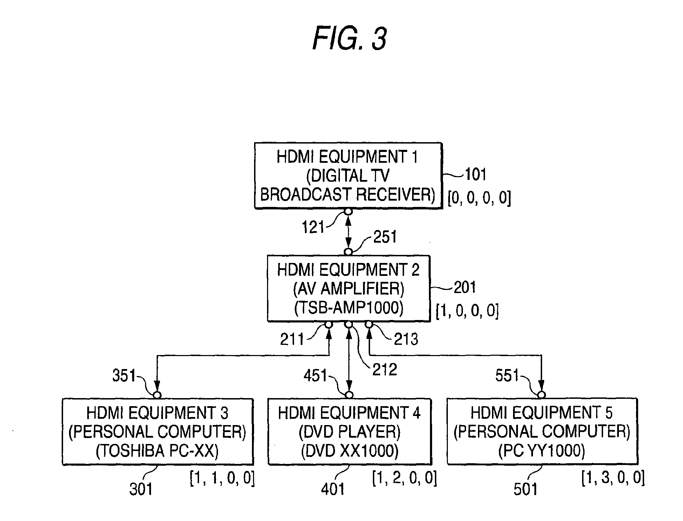

FIG. 3 is a drawing to show an example of connection according to HDMI including the digital TV broadcast receiver 101 incorporating the invention. In the example, the digital TV broadcast receiver 101 and an AV amplifier 201 are connected by HDMI and three HDMI equipments (301, 401, and 501) are connected to the AV amplifier 201 by HDMI as a model. Between HDMI terminals, communications are also conducted about not only audio and video signals, but also a control signal, etc., based on the HDMI standard.

The digital TV broadcast receiver 101 of HDMI equipment 1 is connected to an HDMI terminal 251 of the AV amplifier 201 of HDMI equipment 2 through the HDMI terminal 121.

The AV amplifier 201 of HDMI equipment 2 includes four HDMI terminals. The HDMI terminal 251 is a terminal intended mainly for outputting video and audio and is connected to the HDMI terminal 121 of the digital TV broadcast receiver 101.

The AV amplifier 201 includes three HDMI terminals 211, 212, and 213 mainly as video and audio input terminals.
The HDMI terminal 211 of the AV amplifier 201 is connected to an HDMI terminal 351 of a personal computer (for example, model name: TOSHIBA PC-XX) 301 of HDMI equipment 3.

The HDMI terminal 212 of the AV amplifier 201 is connected to an HDMI terminal 451 of a DVD player (for example, model name: DVD XX1000) 401 of HDMI equipment 4.

The HDMI terminal 213 of the AV amplifier 201 is connected to an HDMI terminal 551 of a personal computer (for example, model name: PC YY1000) 501 of HDMI equipment 5.

The personal computer (for example, model name: TOSHIBA PC-XX) 301 of HDMI equipment 3 is an equipment compatible with HDMI-CEC and outputs video, audio, and control signals (including a control signal according to HDMI-CEC), etc., to the HDMI terminal 211 of the AV amplifier 201.

The DVD player (for example, model name: DVD XX1000) 401 of HDMI equipment 4 is an equipment compatible with HDMI-CEC and outputs video, audio, and control signals (including a control signal according to HDMI-CEC), etc., to the HDMI terminal 212 of the AV amplifier 201.

The personal computer (for example, model name: PC YY1000) 501 of HDMI equipment 5 is an equipment incompatible with HDMI-CEC and outputs video, audio, and control signals to the HDMI terminal 213 of the AV amplifier 201.

For each HDMI equipment, the physical address indicating the address of the HDMI equipment is described in extended display identification data (EDID) and is managed by terminal of each HDMI equipment. The physical address described in the EDID is defined as follows in conformity with the standard of HDMI (High-Definition Multimedia Interface Specification Version 1.3a) (HDMI standard specification):

As the physical address, a four-bit address in a format of [A, B, C, D] (A, B, C, D is one value ranging from 0 to 255) is added. (For details, refer to HDMI standard specification Table 8-6 HDMI-LLC Vendor-Specific Data Block (HDMI VSDB).)

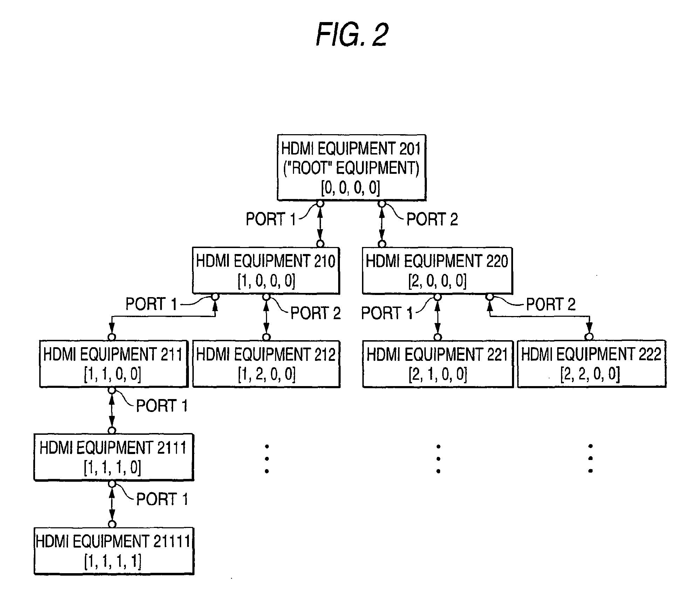

The physical addresses given based on the HDMI standard specification will be discussed with FIG. 2. FIG. 2 is a drawing to describe the physical addresses given based on the HDMI standard specification.

In the standard shown in 8.7.2 Physical Address Discovery and 8.7.3 Discovery Algorithm of the HDMI standard specification, the HDMI equipment 201 of "root" equipment issues physical address [0, 0, 0, 0] to the HDMI equipment 201.

Basically, in HDMI, information required for issuing the physical address (physical address, port number, etc.,) is received from the highest-level equipment and an equipment receiving the information issues the physical address by itself. However, the digital TV broadcast receiver 101 becomes the root equipment and issues the physical address [0, 0, 0, 0] on the understanding that there is no equipment at a higher level than the digital TV broadcast receiver 101.

The HDMI standard defines that the port number "1" of the HDMI equipment 201 of "root" equipment is given to the first bit as the physical address of an HDMI equipment 210 connected to HDMI port 1 of the HDMI equipment 201 of "root" equipment. Thus, the HDMI equipment 210 issues [1, 0, 0, 0] as shown in FIG. 2 as the physical address of the HDMI equipment 210.

Likewise, the HDMI standard defines that the port number "2" of the HDMI equipment 201 of "root" equipment is given to the first bit as the physical address of an HDMI equipment 220 connected to HDMI port 2 of the HDMI equipment 201 of "root" equipment. Thus, the HDMI equipment 220 issues [2, 0, 0, 0] as shown in FIG. 2 as the physical address of the HDMI equipment 220.

Thus, the port number of the "root" equipment is given to the first bit.
The HDMI standard defines that as the physical address of an HDMI equipment 211 connected to HDMI port 1 of the HDMI equipment 210, "1" of the first bit of the higher-level HDMI equipment 210 is quoted in the first bit and "1" of the port number of the HDMI equipment 210 is quoted in the second bit. Thus, the HDMI equipment 211 issues [1, 1, 0, 0] as shown in FIG. 2 as the physical address of the HDMI equipment 211.

Likewise, the HDMI standard defines that as the physical address of an HDMI equipment 212 connected to HDMI port 2 of the HDMI equipment 210, "1" of the first bit of the higher-level HDMI equipment 210 is quoted in the first bit and "2" of the port number of the HDMI equipment 210 is quoted in the second bit. Thus, the HDMI equipment 212 issues [1, 2, 0, 0] as shown in FIG. 2 as the physical address of the HDMI equipment 212.

The HDMI standard defines that as the physical address of an HDMI equipment 221 connected to HDMI port 1 of the HDMI equipment 220, "2" of the first bit of the higher-level HDMI equipment 220 is quoted in the first bit and "1" of the port number of the HDMI equipment 220 is quoted in the second bit. Thus, the HDMI equipment 221 issues [2, 1, 0, 0] as shown in FIG. 2 as the physical address of the HDMI equipment 221.

Likewise, the HDMI standard defines that as the physical address of an HDMI equipment 222 connected to HDMI port 2 of the HDMI equipment 220, "2" of the first bit of the higher-level HDMI equipment 210 is quoted in the first bit and "2" of the port number of the HDMI equipment 220 is quoted in the second bit. Thus, the HDMI equipment 222 issues [2, 2, 0, 0] as shown in FIG. 2 as the physical address of the HDMI equipment 222.

The HDMI standard defines that as the physical address of an HDMI equipment 2111 connected to HDMI port 1 of the HDMI equipment 211, "1" of the first bit of the higher-level HDMI equipment 220 is quoted in the first bit, "1" of the second bit of the higher-level HDMI equipment 211 is quoted in the second bit, and "1" of the port number of the HDMI equipment 211 is quoted in the third bit. Thus, the HDMI equipment 2111 issues [1, 1, 1, 0] as shown in FIG. 2 as the physical address of the HDMI equipment 2111.

The HDMI standard defines that as the physical address of an HDMI equipment 21111 connected to HDMI port 1 of the HDMI equipment 2111, "1" of the first bit of the higher-level HDMI equipment 220 is quoted in the first bit, "1" of the second bit of the higher-level HDMI equipment 211 is quoted in the second bit, "1" of the third bit of the higher-level HDMI equipment 2111 is quoted in the third bit, and "1" of the port number of the HDMI equipment 2111 is quoted in the fourth bit. Thus, the HDMI equipment 21111 issues [1, 1, 1, 1] as shown in FIG. 2 as the physical address of the HDMI equipment 21111.

The physical addresses as shown in FIG. 2 are issued to the HDMI equipments based on the physical address giving rule in the HDMI standard.
The physical address issuing operation is performed when the system configuration changes, when the power is turned on, etc.
Referring again to FIG. 3, in the system shown in the figure, the digital TV broadcast receiver 101 issues the physical address [0, 0, 0, 0] to the digital TV broadcast receiver 101 as the "root." For the physical addresses of the equipments connected to the AV amplifier 201, the physical addresses [1, 1, 0, 0] and [1, 2, 0, 0] are issued based on the rule of issuing the physical address given based on the specification of the HDMI standard described with reference to FIG. 2.

The user controls the digital TV broadcast receiver 101 by operating the remote control 117 and causes the digital TV broadcast receiver 101 to select the HDMI terminal 121 to which the AV amplifier 201 is connected by HDMI input switching. As the physical address of the AV amplifier 201, [1, 0, 0, 0] is issued according to the physical address giving rule as described with reference to FIG. 2.

All HDMI equipments (namely, HDMI equipments 1 to 5) recognize that the physical address of the AV amplifier 201 is [1, 0, 0, 0].
HDMI equipments 1 to 3 connected to HDMI port 1 to HDMI port 3 (HDMI terminals 211 to 213) of the AV amplifier 201 are connected from the AV amplifier 201 whose physical address is [1, 0, 0, 0] and therefore physical addresses [1, 1, 0, 0], [1, 2, 0, 0], and [1, 3, 0, 0] are issued and the information is shared among all HDMI equipments connected according to HDMI.

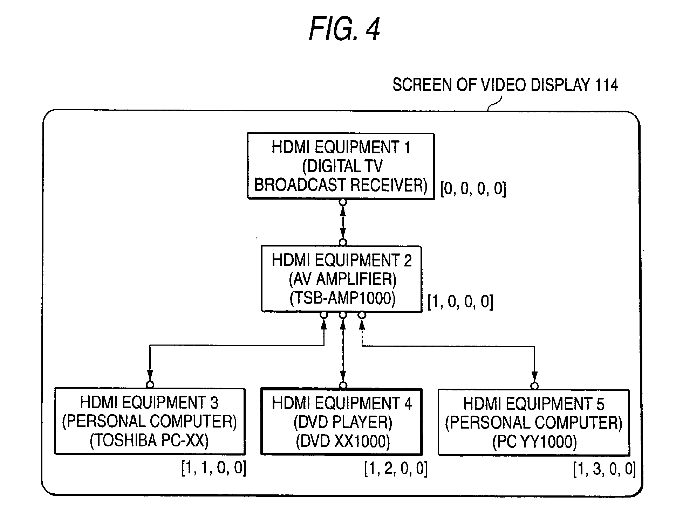

The digital TV broadcast receiver 101 keeps track of the physical addresses, whereby the connection structure of the HDMI equipments can be displayed as shown in a screen display example in FIG. 4. As shown in the figure, a cursor is placed in each HDMI equipment. In FIG. 4, the thick frame of HDMI equipment 4 is a cursor and the cursor indicates that HDMI equipment 4 is selected.

For the HDMI equipment selection function according to screen display shown in FIG. 4, a signal may be generated in the control section 161 in FIG. 1 and may be superposed on a video signal and the screen may be displayed on the video display 114 and the equipment selection function may be implemented as the previously known GUI function.

For example, to change an HDMI source equipment displayed on the video display 114 of the digital TV broadcast receiver 101 from HDMI equipment 3 to HDMI equipment 4, for example, the user operates a "source equipment selection menu" button of the remote control 117 to display a source equipment selection screen shown in FIG. 4. Then, the digital TV broadcast receiver 101 displays the source equipment selection menu in FIG. 3 on the video display 114.

The digital TV broadcast receiver 101 cannot know the presence of any equipment not compatible with the HDMI-CEC standard corresponding to grandchild connection viewed from the digital TV broadcast receiver 101, and the equipment is not displayed on the source equipment selection screen in FIG. 4.

The user can operate up, down, left, and right keys of the remote control 117 to move the cursor on the screen in FIG. 4, thereby selecting any desired HDMI equipment. If the user presses a determination key of the remote control 117 with HDMI equipment 4 selected with the cursor, the HDMI source equipment displayed on the video display 114 of the digital TV broadcast receiver 101 is changed from HDMI equipment 3 to HDMI equipment 4.

To change the HDMI source equipment displayed on the video display 114 of the digital TV broadcast receiver 101 from HDMI equipment 3 to HDMI equipment 4, the digital TV broadcast receiver 101 issues a command for changing the output target of the source to be displayed from [1, 1, 0, 0] to [1, 2, 0, 0] according to a procedure defined in the HDMI-CEC standard and the AV amplifier 201 receiving the command switches a selector in the AV amplifier 201 to select the HDMI equipment 4 and the HDMI equipment 4 outputs data of video, audio, etc., as a source signal from the HDMI terminal 451. Then, the data of video, audio, etc., output from the HDMI terminal 451 is input to the HDMI terminal 121 of the digital TV broadcast receiver 101 through the HDMI terminal 212, the selector, and the HDMI terminal 251 in the AV amplifier 201. Consequently, the data of video, audio, etc., output from the HDMI terminal 451 is displayed on the video display 114.

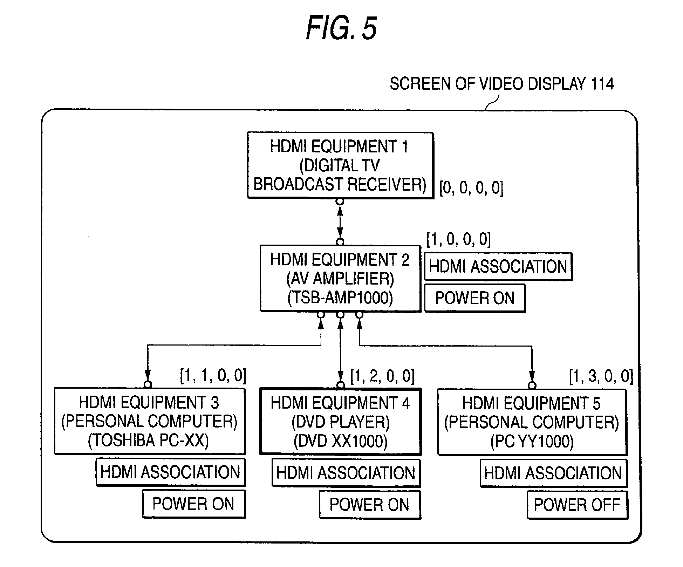

Accordingly, the user can select the source equipment displayed by moving the cursor, etc., out of a tree-like listing screen as shown in FIG. 4.
(Display as to whether or not operation based on HDMI-CEC standard is possible)
Whether or not a connected HDMI equipment is compatible with the HDMI-CEC standard and can be controlled can be determined by transferring information with a CEC command ("give physical address, etc."). Thus, if the connected HDMI equipment can be controlled in response to the information, a character string of "HDMI association" is displayed indicating that operation based on the HDMI-CEC standard is possible, as shown in FIG. 5. It may be displayed as an image of an icon, etc., rather than text.

The digital TV broadcast receiver 101 cannot know the presence of any equipment not compatible with the HDMI-CEC standard corresponding to grandchild connection viewed from the digital TV broadcast receiver 101, and it is impossible to detect HDMI association/non-association, power state (ON/OFF). Therefore, on and after grandchild connection, it is made possible to display HDMI association/non-association and power state (ON/OFF) at the same time only about the equipments compatible with the HDMI-CEC standard.

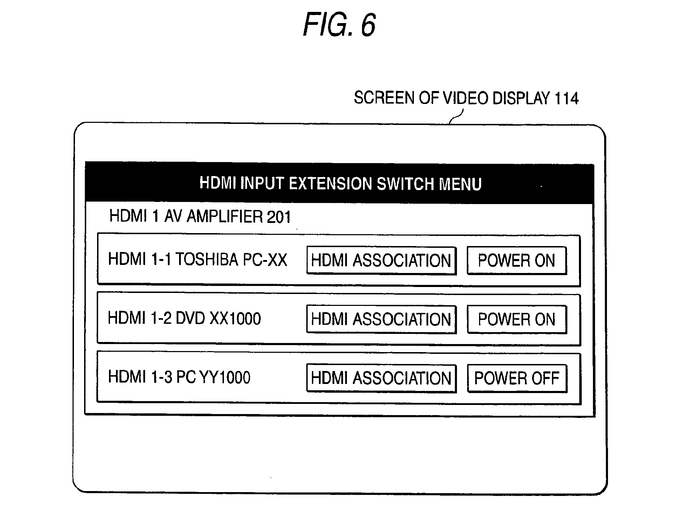

FIG. 6 shows an example applied to a partial hierarchical structure of the connection structure shown in FIG. 3; it shows that three HDMI equipments are connected to one HDMI equipment (in FIG. 6, AV amplifier 201). In FIG. 6, three equipments compatible with the HDMI-CEC standard as source equipments are connected to the AV amplifier 201 and FIG. 6 is a drawing to show a GUI for displaying which source to be selected for the AV amplifier 201.

The AV amplifier 201 is given numeral "1" for display.
The three equipments compatible with the HDMI-CEC standard as source equipments are given numerals "1-1," "1-2," and "1-3" indicating equipments connected to the equipment with numeral 1 for display.

Accordingly, the user can know that the three equipments compatible with the HDMI-CEC standard as source equipments ("1-1, "1-2," and "1-3") are connected to the AV amplifier 201 ("1").

"HDMI association" indicating that operation based on the HDMI-CEC standard is possible may be described in the list on the HDMI equipment listing screen shown in FIG. 6.

### (Display of power ON/OFF state)

Likewise, information indicating the power ON/OFF state that can be acquired with EDID, etc., and the like can also be displayed. For example, information indicating the power ON/OFF state can be further displayed as shown in FIG. 5.

As described above, according to the invention, the HDMI equipment connection information is displayed as a hierarchical structure, so that the HDMI equipment connection state can be known.
Further, the user can select an HDMI equipment from the GUI of the hierarchical structure and thus can select an HDMI equipment from the connection structure.
Further, in addition to the hierarchical structure, the information indicating whether or not each connected HDMI equipment is compatible with the HDMI-CEC standard and can be controlled is also displayed at the same time, so that the user can also know the power ON/OFF state.

Further, in addition to the hierarchical structure, the information indicating the power ON/OFF state is also displayed at the same time, so that the user can also know the power ON/OFF state.
It is to be understood that the invention is not limited to the specific embodiment described above and that the invention can be embodied with the components modified without departing from the spirit and scope of the invention. The invention can be embodied in various forms according to appropriate combinations of the components disclosed in the embodiment described above. For example, some components may be deleted from all components shown in the embodiment. Further, the components in different embodiments may be used appropriately in combination. For example, a genre and a channel may be paired as any desired program attribute.

## Claims

1. A video processing apparatus comprising:
a structure computation unit that obtains a connection structure of HDMI compliant equipments connected with one another by HDMI (High-Definition Multimedia Interface) from physical addresses of the HDMI compliant equipments; and
a video output unit that outputs video signal for displaying the connection structure of the HDMI compliant equipments connected by HDMI.

2. The video processing apparatus according to claim 1, wherein the video output unit outputs the connection structure by tree structure.

3. The video processing apparatus according to claim 1 further comprising:
an equipment selection unit that allows a user to selects at least one of the HDMI equipment from the HDMI compliant equipments connected by HDMI,
wherein the video output unit outputs GUI signal including information of the connection structure for enabling the user to select at least one of the HDMI compliant equipment by using the equipment selection unit in conformity with HDMI-CEC (Consumer Electronics Control) standard.

4. The video processing apparatus according to claim 1, wherein the video output unit outputs the video signal including information of an address and a connected port number of each of the HDMI compliant equipments.

5. The video processing apparatus according to claim 1, wherein the video output unit outputs the video signal including information indicating whether or not each of the HDMI compliant equipments is operable in conformity with HDMI-CEC standard.

6. The video processing apparatus according to claim 1, wherein the video output unit outputs the video signal including information indicating the power mode of each of the HDMI compliant equipments.

7. The video processing apparatus according to claim 1 further comprising:
a display unit that displays the connection structure output from the video output unit.

8. A video processing method comprising:
obtaining a connection structure of HDMI equipments connected by HDMI (High-Definition Multimedia Interface) from physical addresses of HDMI compliant equipments; and
outputting video signal for displaying the connection structure of the HDMI compliant equipments connected by HDMI.
